# EUROPEAN PATENT SPECIFICATION

(11) **EP 4 398 468 B1**
(45) Date of publication and mention of the grant of the patent: **11.02.2026**
(21) Application number: 23215540.8
(22) Date of filing: 11.12.2023
(51) Int. Cl.: H02M 1/32, H02H 9/02, H02H 9/04, H02H 9/00

(54) **DIRECT CURRENT OUTPUT CIRCUIT**
GLEICHSTROMAUSGANGSSCHALTUNG
CIRCUIT DE SORTIE DE COURANT CONTINU

(30) Priority: 05.01.2023 CN 202310012330
(43) Date of publication of application: 10.07.2024
(73) Proprietor: Huawei Digital Power Technologies Co., Ltd., Shenzhen, 518043 (CN)
(72) Inventor: JIANG, Hua, Shenzhen, 518043 (CN); HUANG, Yiyi, Shenzhen, 518043 (CN)
(74) Representative: Epping - Hermann - Fischer

(56) References cited:
- CN-U- 215 646 163
- US-A1- 2008 100 976

## Description

### TECHNICAL FIELD

This application relates to the field of circuit design technologies, and more specifically, to a direct current output circuit.

### BACKGROUND

A switching switch is usually connected in series, at a direct current output of a power supply or a battery of a communication base station, to a power supply port of each branch to implement power-on/power-off control of a load unit of each branch, to meet requirements for energy saving and load management of the base station. For an outdoor communication base station, a power supply cable usually needs to be remotely deployed and exposed outdoors. Therefore, a direct current power supply port further needs to meet a requirement for lightning strike protection. In the conventional technology, a solution of a combination of a semiconductor switch and a high-current bidirectional TVS transistor is usually applied to implement requirements for power-off control and lightning strike protection. A disadvantage of this solution is that costs of the high-current bidirectional TVS transistor are high, and a residual voltage reaches about 130 V. The semiconductor switch generally needs to use a MOS transistor with a withstand voltage of 150 V, and turn-on impedance is large, which does not meet market requirements for high efficiency and low costs of a power supply.

In addition, there is a solution of using a high-capacity contactor, a combination of a direct current relay and a semiconductor switch, or the like as a direct current power-off switching switch. The high-capacity contactor is equipped with an arc extinguishing apparatus, which has high reliability, but is large in size and high in cost. For the combination of the direct current relay and the semiconductor switch, the relay usually requires implementation of soft turn-on and soft turn-off to avoid an arcing failure, which is complex in control. In addition, an additional protection component such as a pressure-sensitive component needs to be added to meet the requirement for lightning protection, causing high overall costs.

Prior art document CN215646163U discloses a lightning protection system with a circuit breaker, four lightning protection circuits with gas discharge tubes and transient diodes, an electronic solid state switching device, a bypass circuit, and a decoupling inductor. Document US2008100976 discloses an arc fault protection circuit with separate output branches.

### SUMMARY

This application provides a direct current output circuit, which can meet requirements for power-off control and lightning protection, and can reduce costs.

The invention is defined by the features of independent device claims 1 and 2. The dependent claims recite advantageous embodiments of the invention.

According to a first aspect, a direct current output circuit is provided, including: a power supply (110), configured to output a direct current, and including a positive electrode and a negative electrode; a plurality of power supply ports, configured to supply power to a load circuit, and including a positive port (180) and a negative port (190), where the positive port (180) is connected to the positive electrode of the power supply (110), and the negative port (190) is connected to the negative electrode of the power supply (110); a semiconductor switch (140), where the semiconductor switch (140) is connected between the negative electrode of the power supply (110) and the negative port (190), and is configured to switch on and off of the load circuit; a decoupling inductor (170), where the decoupling inductor (170) and the semiconductor switch (140) are connected in series between the negative electrode of the power supply (110) and the negative port (190); a first diode (150), where a positive electrode of the first diode (150) is connected to the negative electrode of the power supply, a negative electrode of the first diode (150) is connected to the negative port (190), and the first diode (150) is connected in parallel to the semiconductor switch (140) and the decoupling inductor (170); and a second diode (160), where a positive electrode of the second diode (160) is connected to the negative port (190), a negative electrode of the second diode (160) is connected to the positive port (180), and the second diode (160) is connected in parallel to the load circuit.

Based on the foregoing technical solution, a combined protection method using two diodes and one decoupling inductor is used for lightning protection of the semiconductor switch. Due to a current suppression function of the decoupling inductor, most of a lightning current flows through the diode, thereby implementing overcurrent protection of the semiconductor switch. In addition, due to a clamp function of the diode, overvoltage protection of the semiconductor switch is implemented. On a premise of meeting requirements for a power-off function and lightning protection, costs of the circuit are greatly reduced and a volume of a protection apparatus is reduced.

With reference to the first aspect, the direct current output circuit further includes a current sampling element (130), where the current sampling element (130) is connected in series to the semiconductor switch (140) and the decoupling inductor (170), and is connected in parallel to the first diode (150). The current sampling element (130) detects a current, and when the current is greater than a specified current, the semiconductor switch (140) is turned off.

Based on the foregoing technical solution, the current sampling element is added between the power supply and a branch port of the load circuit to sample a current flowing into the semiconductor switch. When a lightning strike occurs, and it is detected that the current flowing into the semiconductor switch is greater than a specified threshold, the semiconductor switch is controlled to be quickly turned off, so that the current flows to the diode. In this way, the current flowing into the semiconductor switch when a lightning strike occurs can be greatly reduced, thereby further lowering requirements for an overcurrent specification of the semiconductor switch and a specification of the decoupling inductor.

With further reference to the first aspect, the load circuit includes N branches, the direct current output circuit further includes in total N negative ports (190), where each negative port (190) is connected to the negative electrode of the power supply (110), an i^{th} negative port (190) in the N negative ports (190) and the positive port (180) jointly supply power to an i^{th} branch of the load circuit, i∈[1, N], and N>1; N semiconductor switches (140), where an i^{th} semiconductor switch (140) is connected between the negative electrode of the power supply (110) and the i^{th} negative port (190), and is configured to switch on and off of the i^{th} branch; N decoupling inductors (170), where an i^{th} decoupling inductor (170) and the i^{th} semiconductor switch (140) are connected in series between the negative electrode of the power supply (110) and the i^{th} negative port (190); N first diodes (150), where a positive electrode of an i^{th} first diode (150) is connected to the negative electrode of the power supply (110), a negative electrode is connected to the i^{th} negative port (190), and the i^{th} first diode (150) is connected in parallel to the i^{th} semiconductor switch (140) and the i^{th} decoupling inductor (170); and N second diodes (160), where a positive electrode of an i^{th} second diode (160) is connected to the i^{th} negative port (190), a negative electrode is connected to the positive port (180), and the i^{th} second diode (160) is connected in parallel to the i^{th} branch of the load circuit.

Based on the foregoing technical solution, when there are a plurality of branches in the load circuit, the combined protection method using two diodes and one decoupling inductor is used on each load branch for lightning protection of the semiconductor switch. Due to the current suppression function of the decoupling inductor, most of the lightning current flows through the diode, thereby implementing the overcurrent protection of the semiconductor switch. In addition, due to the clamp function of the diode, the overvoltage protection of the semiconductor switch is implemented. On the premise of meeting requirements for a power-off function and lightning protection, costs of the circuit are greatly reduced and the volume of the protection apparatus is reduced.

In addition, the direct current output circuit further includes N current sampling elements (130), where an i^{th} current sampling element (130) is connected in series to the i^{th} semiconductor switch (140) and the i^{th} decoupling inductor (170), and is connected in parallel to the i^{th} first diode (150). The i^{th} current sampling element (130) detects a current, and when the current is greater than a specified current, the i^{th} semiconductor switch (140) is turned off.

Based on the foregoing technical solution, when there are the plurality of branches in the load circuit, on each load branch, the current sampling element is added between the power supply and the branch port of the load branch to sample the current flowing into the semiconductor switch. When a lightning strike occurs, and it is detected that the current flowing into the semiconductor switch is greater than the specified threshold, the semiconductor switch is controlled to be quickly turned off, so that the current flows to the diode. In this way, the current flowing into the semiconductor switch when a lightning strike occurs can be greatly reduced, thereby further lowering the requirements for the overcurrent specification of the semiconductor switch and the specification of the decoupling inductor.

In another implementation, when the load circuit further includes N branches, the direct current output circuit further includes N negative ports (190), where each negative port (190) is connected to the negative electrode of the power supply (110), an i^{th} negative port (190) in the N negative ports (190) and the positive port (180) jointly supply power to an i^{th} branch of the load circuit, i∈[1, N], and N≥ 1; N semiconductor switches (140), where an i^{th} semiconductor switch (140) is connected between the negative electrode of the power supply (110) and the i^{th} negative port (190), and is configured to switch on and off of the i^{th} branch, where the decoupling inductor (170) is connected between the negative electrode of the power supply (110) and the N semiconductor switches (140); N first diodes (150), where a positive electrode of an i^{th} first diode (150) is connected to the negative electrode of the power supply (110), a negative electrode is connected to the i^{th} negative port (190), and the i^{th} first diode (150) is connected in parallel to the i^{th} semiconductor switch (140) and the decoupling inductor (170); and N second diodes (160), where a positive electrode of an i^{th} second diode (160) is connected to the i^{th} negative port (190), a negative electrode is connected to the positive port (180), and the i^{th} second diode (160) is connected in parallel to the i^{th} branch of the load circuit.

Based on the foregoing technical solution, when there are the plurality of branches in the load circuit, the combined protection method using two diodes and one decoupling inductor that is shared by all load branches is used on each load branch for the lightning protection of the semiconductor switch. Due to the current suppression function of the decoupling inductor, most of the lightning current flows through the diode, thereby implementing the overcurrent protection of the semiconductor switch. In addition, due to the clamp function of the diode, the overvoltage protection of the semiconductor switch is implemented. On the premise of meeting the requirements for a power-off function and lightning protection, costs of the circuit are greatly reduced and the volume of the protection apparatus is reduced. In addition, the public decoupling inductor is connected between the negative electrode of the power supply and the semiconductor switches of all branch circuits, thereby reducing a quantity of decoupling inductors and further reducing costs.

The direct current output circuit further includes N current sampling elements (130), where an i^{th} current sampling element (130) is connected in series to the i^{th} semiconductor switch (140) and the i^{th} decoupling inductor (170), and is connected in parallel to the i^{th} first diode (150). The i^{th} current sampling element (130) detects a current, and when the current is greater than a specified current, the i^{th} semiconductor switch (140) is turned off.

Based on the foregoing technical solution, when there are the plurality of branches in the load circuit, on each load branch, the current sampling element is added between the power supply and the branch port of the load branch to sample the current flowing into the semiconductor switch. When a lightning strike occurs, and it is detected that the current flowing into the semiconductor switch is greater than the specified threshold, the semiconductor switch is controlled to be quickly turned off, so that the current flows to the diode. In this way, the current flowing into the semiconductor switch when a lightning strike occurs can be greatly reduced, thereby further lowering the requirements for the overcurrent specification of the semiconductor switch and the specification of the decoupling inductor.

With reference to the first aspect, in some implementations of the first aspect, the semiconductor switch (140) is an insulated gate bipolar transistor, a metal-oxide-semiconductor field-effect transistor, or a gallium nitride FET.

With reference to the first aspect, in some implementations of the first aspect, the first diode (150) or the second diode (160) is a common rectifier diode, a fast recovery diode, a common switching diode, a Schottky diode, a transient voltage suppression diode, or a Zener diode.

With reference to the first aspect, in some implementations of the first aspect, the first diode (150) or the second diode (160) includes a plurality of diodes connected in parallel.

With reference to the first aspect, in some implementations of the first aspect, the first diode (150) and the second diode (160) each include one diode obtained by connecting diodes in series; include a plurality of diodes, each of which is obtained by connecting diodes in series; or include diodes that are packaged together and that are obtained through both series connection and parallel connection.

### BRIEF DESCRIPTION OF DRAWINGS

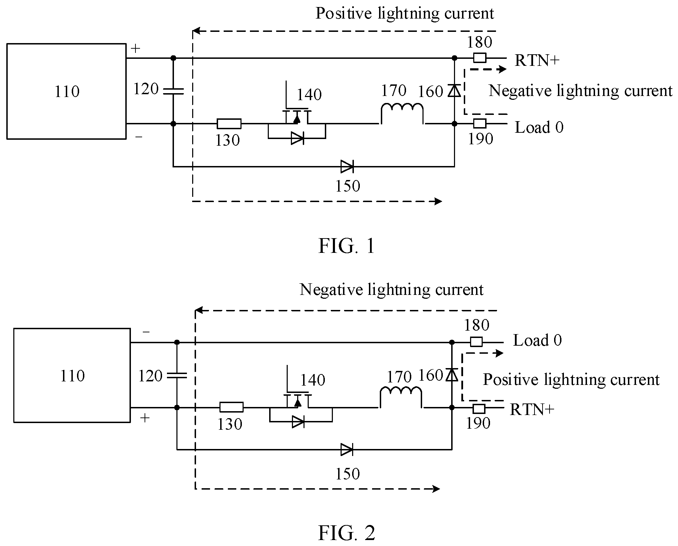

The embodiments detailed along Figures 1 and 2 are not according to the claimed invention but useful for understanding the invention.
FIG. 1 is a schematic diagram of a main circuit of a direct current output circuit according to an embodiment of this application;
FIG. 2 is a schematic diagram of a main circuit of another direct current output circuit according to an embodiment of this application;
FIG. 3 is a schematic diagram of a main circuit of still another direct current output circuit according to an embodiment of this application; and
FIG. 4 is a schematic diagram of a main circuit of still another direct current output circuit according to an embodiment of this application.

### DESCRIPTION OF EMBODIMENTS

The following describes technical solutions of this application with reference to the accompanying drawings.

Embodiments of this application may be applied to an application scenario in which a power-on/power-off switch is connected, at a direct current output such as an AC-DC power supply, a DC-DC power supply, or a battery of a communication base station, to a single port output or a multiport output, for example, a straight lithium battery, an electronic switch, a blade power supply powered by a multi-band load unit, and a cabinet power supply.

It should be noted that a positive lightning current in embodiments of this application is a lightning current that flows in from an RTN electrode and flows out from a load electrode, and a negative lightning current is a lightning current that flows in from the load electrode and flows out from the RTN electrode.

FIG. 1 is a schematic diagram of a main circuit of a direct current output circuit according to an embodiment of this application. A semiconductor switch in this embodiment is connected to a negative electrode of a power supply.

The direct current output circuit shown in FIG. 1 includes a power supply 110, a filter capacitor 120, a positive port 180, a negative port 190, a semiconductor switch 140, a decoupling inductor 170, a diode 150, and a diode 160.

The power supply 110 is configured to supply power to a load circuit, and includes a positive electrode and a negative electrode.

Optionally, the power supply 110 may be any apparatus that can output a direct current, such as a battery. This is not limited in this application.

In addition, the filter capacitor 120 is disposed between the positive electrode and the negative electrode of the power supply. A positive electrode of the filter capacitor 120 is connected to the positive electrode of the power supply, and a negative electrode of the filter capacitor 120 is connected to the negative electrode of the power supply. The filter capacitor 120 is closest to the power supply. The filter capacitor 120 is directly connected to the power supply, and there is no other component between the filter capacitor 120 and the power supply.

In addition, power supply ports are configured to supply power to a load circuit load 0, and include an RTN positive port 180 and a negative port 190 of the load circuit load 0.

In this embodiment of this application, the positive electrode of the power supply is connected to the positive port 180, and the negative electrode of the power supply is connected to the negative port 190.

The semiconductor switch 140 is configured to switch on and off of the load circuit load 0.

As shown in FIG. 1, in a circuit between the negative electrode of the power supply and the negative port 190, the semiconductor switch 140 and the decoupling inductor 170 are connected in series between the negative electrode of the power supply and the negative port 190. A positive electrode of the diode 150 is connected to the negative electrode of the power supply, a negative electrode of the diode 150 is connected to the negative port 190, and the diode 150 is connected in parallel to the semiconductor switch 140 and the decoupling inductor 170. A positive electrode of the diode 160 is connected to the negative port 190, a negative electrode of the diode 160 is connected to the positive port 180, and the diode 160 is connected in parallel to the load circuit load 0.

As shown in FIG. 1, due to a current suppression function of the decoupling inductor 170, when there is a positive lightning current, most of the current flows through the diode 150, and when there is a negative lightning current, most of the current flows through the diode 160, thereby implementing overcurrent protection of the semiconductor switch 140. When there is the negative lightning current, overvoltage protection of the semiconductor switch 140 is implemented due to a clamp function of the diode 160.

It should be noted that, as shown in FIG. 1, when there is the positive lightning current, the current first flows through the positive electrode and the negative electrode of the power supply 110, and then flows to the diode 150. A device such as a large-capacity filter capacitor or a varistor is usually connected in parallel between the positive electrode and the negative electrode of the power supply 110, to provide a path for the positive lightning current.

In a possible implementation, the direct current output circuit further includes a current sampling element 130. As shown in FIG. 1, the current sampling element 130 is connected in series to the semiconductor switch 140 and the decoupling inductor 170, and is connected in parallel to the diode 150.

The current sampling element 130 may detect a current passing through the semiconductor switch 140. When the current is greater than a specified current, the semiconductor switch 140 is turned off.

In a possible implementation, current detection is performed on the semiconductor switch 140 by using the current sampling element 130, to implement overcurrent protection (overcurrent protection, OCP) of the semiconductor switch 140.

It should be understood that the specified current is less than a current that the semiconductor switch 140 can bear.

In this case, when a negative lightning strike occurs, if the current sampling element 130 detects that the current exceeds the specified current, the semiconductor switch 140 is quickly turned off. After the semiconductor switch 140 is turned off, all of the lightning current flows to the diode 160. In this way, requirements for a transient current specification in a channel direction of the semiconductor switch 140 and inductance of 170 can be further reduced.

Optionally, the semiconductor switch 140 is an insulated gate bipolar transistor, a metal-oxide-semiconductor field-effect transistor, or a gallium nitride FET.

Optionally, the diode 150 and the diode 160 are common rectifier diodes, fast recovery diodes, common switching diodes, Schottky diodes, transient voltage suppression diodes, or Zener diodes.

Optionally, the diode 150 and the diode 160 each include a plurality of diodes connected in parallel; include one diode obtained by connecting diodes in series; include a plurality of diodes, each of which is obtained by connecting diodes in series; or include diodes that are packaged together and that are obtained through both series connection and parallel connection.

FIG. 2 is a schematic diagram of a main circuit of another direct current output circuit according to an embodiment of this application. A semiconductor switch in this embodiment is connected to a positive electrode of a power supply.

The direct current output circuit shown in FIG. 2 includes a power supply 110, a filter capacitor 120, a positive port 180, a negative port 190, a semiconductor switch 140, a decoupling inductor 170, a diode 150, and a diode 160.

The power supply 110 is configured to supply power to a load circuit, and includes a positive electrode and a negative electrode.

Optionally, the power supply 110 may be any apparatus that can output a direct current, such as a battery. This is not limited in this application.

In addition, the filter capacitor 120 is disposed between the positive electrode and the negative electrode of the power supply. A positive electrode of the filter capacitor 120 is connected to the positive electrode of the power supply, and a negative electrode of the filter capacitor 120 is connected to the negative electrode of the power supply. The filter capacitor 120 is closest to the power supply. The filter capacitor 120 is directly connected to the power supply, and there is no other component between the filter capacitor 120 and the power supply.

In addition, power supply ports are configured to supply power to a load circuit load 0, and include an RTN positive port 180 and a negative port 190 of the load circuit load 0.

In this embodiment of this application, the positive electrode of the power supply is connected to the positive port 180, and the negative electrode of the power supply is connected to the negative port 190.

The semiconductor switch 140 is configured to switch on and off of the load circuit load 0.

As shown in FIG. 2, in a circuit between the negative electrode of the power supply and the negative port 190, the semiconductor switch 140 and the decoupling inductor 170 are connected in series between the positive electrode of the power supply and the positive port 180. A positive electrode of the diode 150 is connected to the positive electrode of the power supply, a negative electrode of the diode 150 is connected to the positive port 180, and the diode 150 is connected in parallel to the semiconductor switch 140 and the decoupling inductor 170. A positive electrode of the diode 160 is connected to the positive port 190, a negative electrode of the diode 160 is connected to the negative port 190, and the diode 160 is connected in parallel to the load circuit load 0.

As shown in FIG. 2, due to a current suppression function of the decoupling inductor 170, when there is a positive lightning current, most of the current flows through the diode 160, and when there is a negative lightning current, most of the current flows through the diode 150, thereby implementing overcurrent protection of the semiconductor switch 140. When there is the positive lightning current, overvoltage protection of the semiconductor switch 140 is implemented due to a clamp function of the diode 160.

It should be noted that, as shown in FIG. 2, when there is the negative lightning current, the current first flows through the positive electrode and the negative electrode of the power supply 110, and then flows to the diode 150. A device such as a large-capacity filter capacitor or a varistor is usually connected in parallel between the positive electrode and the negative electrode of the power supply 110, to provide a path for the negative lightning current.

In a possible implementation, the direct current output circuit further includes a current sampling element 130. As shown in FIG. 2, the current sampling element 130 is connected in series to the semiconductor switch 140 and the decoupling inductor 170, and is connected in parallel to the diode 150.

The current sampling element 130 may detect a current passing through the semiconductor switch 140. When the current is greater than a specified current, the semiconductor switch 140 is turned off.

In a possible implementation, current detection is performed on the semiconductor switch 140 by using the current sampling element 130, to implement overcurrent protection (overcurrent protection, OCP) of the semiconductor switch 140.

It should be understood that the specified current is less than a current that the semiconductor switch 140 can bear.

In this case, when a positive lightning strike occurs, if the current sampling element 130 detects that the current exceeds the specified current, the semiconductor switch 140 is quickly turned off. After the semiconductor switch 140 is turned off, all of the lightning current flows to the diode 160. In this way, requirements for a transient current specification in a channel direction of the semiconductor switch 140 and inductance of 170 can be further reduced.

Optionally, the semiconductor switch 140 is an insulated gate bipolar transistor, a metal-oxide-semiconductor field-effect transistor, or a gallium nitride FET.

Optionally, the diode 150 and the diode 160 are common rectifier diodes, fast recovery diodes, common switching diodes, Schottky diodes, transient voltage suppression diodes, or Zener diodes.

Optionally, the diode 150 and the diode 160 each include a plurality of diodes connected in parallel; include one diode obtained by connecting diodes in series; include a plurality of diodes, each of which is obtained by connecting diodes in series; or include diodes that are packaged together and that are obtained through both series connection and parallel connection.

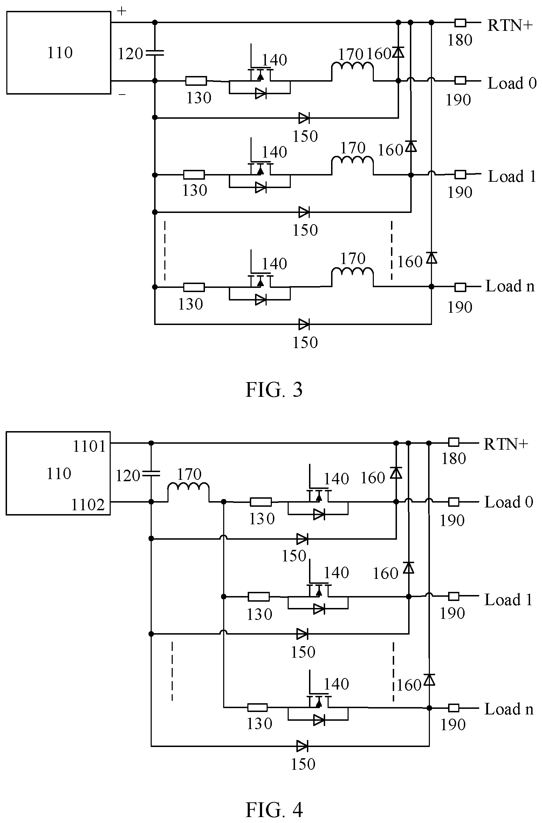

FIG. 3 is a schematic diagram of a main circuit of a direct current output circuit according to an embodiment of this application. In addition to load 0, the load circuit in this embodiment further includes a plurality of branches load 1, load 2, ..., and load n. One semiconductor switch is disposed on each branch, and n is an integer greater than or equal to 1.

As shown in FIG. 3, the direct current output circuit in this embodiment includes the direct current output circuit in FIG. 1, to be specific, includes a power supply 110, a filter capacitor 120, a positive port 180, a negative port 190, and a semiconductor switch 140, a decoupling inductor 170, a diode 150, and a diode 160 that are disposed between the power supply 110 and the negative port 190 of load 0.

In addition, in the load circuit in this embodiment, the plurality of branches load 1, load 2, ..., load i, ..., and load n are added on the basis of load 0. Load i is an i^{th} branch of the load circuit, a negative port of load i is disposed on the i^{th} branch, and a semiconductor switch 140, a decoupling inductor 170, a diode 150, and a diode 160 are disposed between the power supply 110 and the negative port of load i.

The power supply 110 is configured to supply power to the load circuit, and includes a positive electrode and a negative electrode.

Optionally, the power supply may be any apparatus that can output a direct current, such as a battery. This is not limited in this application.

In addition, the filter capacitor 120 is disposed between the positive electrode and the negative electrode of the power supply. A positive electrode of the filter capacitor 120 is connected to the positive electrode of the power supply, and a negative electrode of the filter capacitor 120 is connected to the negative electrode of the power supply. The filter capacitor 120 is closest to the power supply. The filter capacitor 120 is directly connected to the power supply, and there is no other component between the filter capacitor 120 and the power supply.

In addition, an RTN positive port 180 and the negative port 190 of the load i are configured to supply power to the i^{th} branch load i of the load circuit.

It should be understood that the RTN positive port is connected to the positive electrode of the power supply, and negative ports of the n branches are separately connected to the negative electrode of the power supply.

As shown in FIG. 3, in addition to load 0, there are a total of n branches in the load circuit. A circuit between the power supply and the i^{th} branch load i is referred to as an i^{th} branch circuit. An i^{th} semiconductor switch 140 is disposed between the negative electrode of the power supply and the negative port 190 of load i, and is configured to switch on and off of the i^{th} branch load i of the load circuit.

It should be understood that there are a total of N branch circuits in this embodiment.

In the i^{th} branch circuit, the semiconductor switch 140 and the decoupling inductor 170 are connected in series between the negative electrode of the power supply and the negative port 190 of load i. A positive electrode of the diode 150 is connected to the negative electrode of the power supply, a negative electrode of the diode 150 is connected to the negative port 190 of load i, and the diode 150 is connected in parallel to the semiconductor switch 140 and the decoupling inductor 170. A positive electrode of the diode 160 is connected to the negative port 190 of load i, a negative electrode of the diode 160 is connected to the positive port 180 of the RTN, and the diode 160 is connected in parallel to the i^{th} branch load i of the load circuit.

As shown in FIG. 3, in the i^{th} branch circuit, due to a current suppression function of the decoupling inductor 170, when there is a positive lightning current, most of the current flows through the diode 150, and when there is a negative lightning current, most of the current flows through the diode 160, thereby implementing overcurrent protection of the semiconductor switch 140. When there is the negative lightning current, overvoltage protection of the semiconductor switch 140 is implemented due to a clamp function of the diode 160.

It should be noted that, as shown in FIG. 3, in the i^{th} branch circuit, when there is the positive lightning current, the current first flows through the positive electrode and the negative electrode of the power supply 110, and then flows to the diode 150. A device such as a large-capacity filter capacitor or a varistor is usually connected in parallel between the positive electrode and the negative electrode of the power supply 110, to provide a path for the positive lightning current.

In a possible implementation, the direct current output circuit further includes n current sampling elements 130. An i^{th} current sampling element 130 is disposed in the i^{th} branch circuit, is connected in series to the semiconductor switch 140 and the decoupling inductor 170, and is connected in parallel to the diode 150.

In the i^{th} branch circuit, the current sampling element 130 may detect a current passing through the semiconductor switch 140. When the current is greater than a specified current, the semiconductor switch 140 is turned off.

In a possible implementation, current detection is performed on the semiconductor switch 140 by using the current sampling element 130, to implement the overcurrent protection (overcurrent protection, OCP) of the semiconductor switch 140.

It should be understood that the specified current is less than a current that the semiconductor switch 140 can bear.

In this case, in the i^{th} branch circuit, when a negative lightning strike occurs, if the current sampling element 130 detects that the current exceeds the specified current, the semiconductor switch 140 is quickly turned off. After the semiconductor switch 140 is turned off, all of the lightning current flows to the diode 160. In this way, requirements for a transient current specification in a channel direction of the semiconductor switch 140 and inductance of the decoupling inductor 170 can be further reduced.

Optionally, the semiconductor switch 140 is an insulated gate bipolar transistor, a metal-oxide-semiconductor field-effect transistor, a gallium nitride FET, or silicon carbide.

Optionally, the diode 150 and the diode 160 are common rectifier diodes, fast recovery diodes, common switching diodes, Schottky diodes, transient voltage suppression diodes, or Zener diodes.

Optionally, the diode 150 and the diode 160 each include a plurality of diodes connected in parallel; include one diode obtained by connecting diodes in series; include a plurality of diodes, each of which is obtained by connecting diodes in series; or include diodes that are packaged together and that are obtained through both series connection and parallel connection.

FIG. 4 is a schematic diagram of a main circuit of still another direct current output circuit according to an embodiment of this application. In addition to load 0, the load circuit in this embodiment further includes a plurality of branches load 1, load 2, ..., and load n. One semiconductor switch is disposed on each branch, and n is an integer greater than or equal to 1.

As shown in FIG. 4, a difference between the direct current output circuit in this embodiment and that in FIG. 3 is that all branch circuits share one decoupling resistor 170.

As shown in FIG. 4, the decoupling inductor 170 is connected between a negative electrode of a power supply and semiconductor switches 140 of all branch circuits, thereby reducing a quantity of decoupling inductors and further reducing costs.

The foregoing descriptions are merely specific implementations of this application, but the protection scope of this application is not limited thereto. Any variation or replacement readily figured out by a person skilled in the art within the technical scope disclosed in this application shall fall within the protection scope of this application.

Therefore, the protection scope of this application shall be subject to the protection scope of the claims.

## Claims

1. A direct current output circuit, comprising:
a power supply (110), configured to output a direct current, and comprising a positive electrode and a negative electrode;
a plurality of power supply ports, configured to supply power to a load circuit, and comprising a positive port (180) and a negative port (190), wherein the positive port (180) is connected to the positive electrode of the power supply (110), and the negative port (190) is connected to the negative electrode of the power supply (110);
a semiconductor switch (140), wherein the semiconductor switch (140) is connected between the negative electrode of the power supply (110) and the negative port (190), and is configured to switch on and off of the load circuit;
a decoupling inductor (170), wherein the decoupling inductor (170) and the semiconductor switch (140) are connected in series between the negative electrode of the power supply (110) and the negative port (190);
a first diode (150), wherein a positive electrode of the first diode (150) is connected to the negative electrode of the power supply, a negative electrode of the first diode (150) is connected to the negative port (190), and the first diode (150) is connected in parallel to the semiconductor switch (140) and the decoupling inductor (170); and
a second diode (160), wherein a positive electrode of the second diode (160) is connected to the negative port (190), a negative electrode of the second diode (160) is connected to the positive port (180), and the second diode (160) is configured to be connected in parallel to the load circuit;
wherein the direct current output circuit further comprises:
a current sampling element (130), wherein the current sampling element (130) is connected in series to the semiconductor switch (140) and the decoupling inductor (170), and is connected in parallel to the first diode (150), wherein
the current sampling element (130) is configured to detect a current, and when the current is greater than a specified current, the semiconductor switch (140) is turned off;
wherein the load circuit comprises in total N branches, and the direct current output circuit further comprises:
N negative ports (190), wherein each negative port (190) is connected to the negative electrode of the power supply (110), an i^{th} negative port (190) in the N negative ports (190) and the positive port (180) jointly supply power to an i^{th} branch of the load circuit, i∈[1, N], and N>1;
N semiconductor switches (140), wherein an i^{th} semiconductor switch (140) is connected between the negative electrode of the power supply (110) and the i^{th} negative port (190), and is configured to switch on and off of the i^{th} branch;
N decoupling inductors (170), wherein an i^{th} decoupling inductor (170) and the i^{th} semiconductor switch (140) are connected in series between the negative electrode of the power supply (110) and the i^{th} negative port (190);
N first diodes (150), wherein a positive electrode of an i^{th} first diode (150) is connected to the negative electrode of the power supply (110), a negative electrode is connected to the i^{th} negative port (190), and the i^{th} first diode (150) is connected in parallel to the i^{th} semiconductor switch (140) and the i^{th} decoupling inductor (170); and
N second diodes (160), wherein a positive electrode of an i^{th} second diode (160) is connected to the i^{th} negative port (190), a negative electrode is connected to the positive port (180), and the i^{th} second diode (160) is connected in parallel to the i^{th} branch of the load circuit;
wherein the direct current output circuit further comprises:
N current sampling elements (130), wherein an i^{th} current sampling element (130) is connected in series to the i^{th} semiconductor switch (140) and the i^{th} decoupling inductor (170), and is connected in parallel to the i^{th} first diode (150), wherein
the i^{th} current sampling element (130) is configured to detect a current, and when the current is greater than a specified current, the i^{th} semiconductor switch (140) is turned off.

2. A direct current output circuit, comprising:
a power supply (110), configured to output a direct current, and comprising a positive electrode and a negative electrode;
a plurality of power supply ports, configured to supply power to a load circuit, and comprising a positive port (180) and a negative port (190), wherein the positive port (180) is connected to the positive electrode of the power supply (110), and the negative port (190) is connected to the negative electrode of the power supply (110);
a semiconductor switch (140), wherein the semiconductor switch (140) is connected between the negative electrode of the power supply (110) and the negative port (190), and is configured to switch on and off of the load circuit;
a decoupling inductor (170), wherein the decoupling inductor (170) and the semiconductor switch (140) are connected in series between the negative electrode of the power supply (110) and the negative port (190);
a first diode (150), wherein a positive electrode of the first diode (150) is connected to the negative electrode of the power supply, a negative electrode of the first diode (150) is connected to the negative port (190), and the first diode (150) is connected in parallel to the semiconductor switch (140) and the decoupling inductor (170); and
a second diode (160), wherein a positive electrode of the second diode (160) is connected to the negative port (190), a negative electrode of the second diode (160) is connected to the positive port (180), and the second diode (160) is configured to be connected in parallel to the load circuit;
wherein the direct current output circuit further comprises:
a current sampling element (130), wherein the current sampling element (130) is connected in series to the semiconductor switch (140) and the decoupling inductor (170), and is connected in parallel to the first diode (150), wherein
the current sampling element (130) is configured to detect a current, and when the current is greater than a specified current, the semiconductor switch (140) is turned off;
wherein the load circuit comprises in total N branches, and the direct current output circuit further comprises:
N negative ports (190), wherein each negative port (190) is connected to the negative electrode of the power supply (110), an i^{th} negative port (190) in the N negative ports (190) and the positive port (180) jointly supply power to an i^{th} branch of the load circuit, i∈[1, N], and N > 1;
N semiconductor switches (140), wherein an i^{th} semiconductor switch (140) is connected between the negative electrode of the power supply (110) and the i^{th} negative port (190), and is configured to switch between on and off of the i^{th} branch, wherein
the decoupling inductor (170) is connected between the negative electrode of the power supply (110) and the N semiconductor switches (140);
N first diodes (150), wherein a positive electrode of an i^{th} first diode (150) is connected to the negative electrode of the power supply (110), a negative electrode is connected to the i^{th} negative port (190), and the i^{th} first diode (150) is connected in parallel to the i^{th} semiconductor switch (140) and the decoupling inductor (170); and
N second diodes (160), wherein a positive electrode of an i^{th} second diode (160) is connected to the i^{th} negative port (190), a negative electrode is connected to the positive port (180), and the i^{th} second diode (160) is connected in parallel to the i^{th} branch of the load circuit;
wherein the direct current output circuit further comprises:
N current sampling elements (130), wherein an i^{th} current sampling element (130) is connected in series to the i^{th} semiconductor switch (140) and is connected in parallel to the i^{th} first diode (150), wherein
the i^{th} current sampling element (130) is configured to detect a current, and when the current is greater than a specified current, the i^{th} semiconductor switch (140) is turned off.

3. The direct current output circuit according to any one of claims 1 to 2, wherein the semiconductor switch (140) is an insulated gate bipolar transistor, a metal-oxide-semiconductor field-effect transistor, or a gallium nitride FET.

4. The direct current output circuit according to any one of claims 1 to 3, wherein the first diode (150) or the second diode (160) is a common rectifier diode, a fast recovery diode, a common switching diode, a Schottky diode, a transient voltage suppression diode, or a Zener diode.

5. The direct current output circuit according to any one of claims 1 to 4, wherein the first diode (150) or the second diode (160) comprises a plurality of diodes connected in parallel.

6. The direct current output circuit according to any one of claims 1 to 5, wherein the first diode (150) and the second diode (160) each comprise one diode obtained by connecting diodes in series;
comprise a plurality of diodes, each of which is obtained by connecting diodes in series; or
comprise diodes that are packaged together and that are obtained through both series connection and parallel connection.

## Patentansprüche

1. Gleichstromausgangskreis, der umfasst:
eine Leistungsversorgung (110), die konfiguriert ist, um einen Gleichstrom auszugeben, und eine positive Elektrode und eine negative Elektrode umfasst; eine Vielzahl von Leistungsversorgungsanschlüssen, die konfiguriert sind, um einen Lastkreis mit Leistung zu versorgen, und einen positiven Anschluss (180) und einen negativen Anschluss (190) umfassen, wobei der positive Anschluss (180) mit der positiven Elektrode der Leistungsversorgung (110) verbunden ist und der negative Anschluss (190) mit der negativen Elektrode der Leistungsversorgung (110) verbunden ist;
einen Halbleiterschalter (140), wobei der Halbleiterschalter (140) zwischen der negativen Elektrode der Leistungsversorgung (110) und dem negativen Anschluss (190) verbunden ist und konfiguriert ist, um den Lastkreis ein- und auszuschalten; eine Entkopplungsinduktivität (170), wobei die Entkopplungsinduktivität (170) und der Halbleiterschalter (140) in Reihenschaltung zwischen der negativen Elektrode der Leistungsversorgung (110) und dem negativen Anschluss (190) verbunden sind; eine erste Diode (150), wobei eine positive Elektrode der ersten Diode (150) mit der negativen Elektrode der Leistungsversorgung verbunden ist, eine negative Elektrode der ersten Diode (150) mit dem negativen Anschluss (190) verbunden ist und die erste Diode (150) in Parallelschaltung mit dem Halbleiterschalter (140) und der Entkopplungsinduktivität (170) verbunden ist; und
eine zweite Diode (160), wobei eine positive Elektrode der zweiten Diode (160) mit dem negativen Anschluss (190) verbunden ist, eine negative Elektrode der zweiten Diode (160) mit dem positiven Anschluss (180) verbunden ist und die zweite Diode (160) konfiguriert ist, um in Parallelschaltung mit dem Lastkreis verbunden zu werden;
wobei der Gleichstromausgangskreis ferner umfasst:
ein Stromabtastelement (130), wobei das Stromabtastelement (130) in Reihenschaltung mit dem Halbleiterschalter (140) und der Entkopplungsinduktivität (170) verbunden ist und in Parallelschaltung mit der ersten Diode (150) verbunden ist, wobei
das Stromabtastelement (130) konfiguriert ist, um einen Strom zu erfassen, und wenn der Strom größer als ein bestimmter Strom ist, der Halbleiterschalter (140) ausgeschaltet wird;
wobei der Lastkreis insgesamt N Zweige umfasst und
der Gleichstromausgangskreis ferner umfasst:
N negative Anschlüsse (190), wobei jeder negative Anschluss (190) mit der negativen Elektrode der Leistungsversorgung (110) verbunden ist, ein i-ter negativer Anschluss (190) in den N negativen Anschlüssen (190) und der positive Anschluss (180) einen i-ten Zweig des Lastkreises gemeinsam versorgen, i∈[1, N] und N>1;
N Halbleiterschalter (140), wobei ein i-ter Halbleiterschalter (140) zwischen der negativen Elektrode der Leistungsversorgung (110) und dem i-ten negativen Anschluss (190) verbunden ist und konfiguriert ist, um den i-ten Zweig ein- und auszuschalten;
N Entkopplungsinduktivitäten (170), wobei eine i-te Entkopplungsinduktivität (170) und der i-te Halbleiterschalter (140) in Reihenschaltung zwischen der negativen Elektrode der Leistungsversorgung (110) und dem i-ten negativen Anschluss (190) verbunden sind;
N erste Dioden (150), wobei eine positive Elektrode einer i-ten ersten Diode (150) mit der negativen Elektrode der Leistungsversorgung (110) verbunden ist, eine negative Elektrode mit dem i-ten negativen Anschluss (190) verbunden ist und die i-te erste Diode (150) in Parallelschaltung mit dem i-ten Halbleiterschalter (140) und der i-ten Entkopplungsinduktivität (170) verbunden ist; und
N zweite Dioden (160), wobei eine positive Elektrode einer i-ten zweiten Diode (160) mit dem i-ten negativen Anschluss (190) verbunden ist, eine negative Elektrode mit dem positiven Anschluss (180) verbunden ist und die i-te zweite Diode (160) in Parallelschaltung mit dem i-ten Zweig des Lastkreises verbunden ist;
wobei der Gleichstromausgangskreis ferner umfasst:
N Stromabtastelemente (130), wobei ein i-tes Stromabtastelement (130) in Reihenschaltung mit dem i-ten Halbleiterschalter (140) und der i-ten Entkopplungsinduktivität (170) verbunden ist und in Parallelschaltung mit der i-ten ersten Diode (150) verbunden ist, wobei
das i-te Stromabtastelement (130) konfiguriert ist, um einen Strom zu erfassen, und wenn der Strom größer als ein bestimmter Strom ist, der i-te Halbleiterschalter (140) ausgeschaltet wird.

2. Gleichstromausgangskreis, der umfasst:
eine Leistungsversorgung (110), die konfiguriert ist, um einen Gleichstrom auszugeben, und eine positive Elektrode und eine negative Elektrode umfasst;
eine Vielzahl von Leistungsversorgungsanschlüssen, die konfiguriert sind, um einen Lastkreis mit Leistung zu versorgen, und einen positiven Anschluss (180) und einen negativen Anschluss (190) umfassen, wobei der positive Anschluss (180) mit der positiven Elektrode der Leistungsversorgung (110) verbunden ist und der negative Anschluss (190) mit der negativen Elektrode der Leistungsversorgung (110) verbunden ist;
einen Halbleiterschalter (140), wobei der Halbleiterschalter (140) zwischen der negativen Elektrode der Leistungsversorgung (110) und dem negativen Anschluss (190) verbunden ist und konfiguriert ist, um den Lastkreis ein- und auszuschalten;
eine Entkopplungsinduktivität (170), wobei die Entkopplungsinduktivität (170) und der Halbleiterschalter (140) in Reihenschaltung zwischen der negativen Elektrode der Leistungsversorgung (110) und dem negativen Anschluss (190) verbunden sind;
eine erste Diode (150), wobei eine positive Elektrode der ersten Diode (150) mit der negativen Elektrode der Leistungsversorgung verbunden ist, eine negative Elektrode der ersten Diode (150) mit dem negativen Anschluss (190) verbunden ist und die erste Diode (150) in Parallelschaltung mit dem Halbleiterschalter (140) und der Entkopplungsinduktivität (170) verbunden ist; und
eine zweite Diode (160), wobei eine positive Elektrode der zweiten Diode (160) mit dem negativen Anschluss (190) verbunden ist, eine negative Elektrode der zweiten Diode (160) mit dem positiven Anschluss (180) verbunden ist und die zweite Diode (160) konfiguriert ist, um in Parallelschaltung mit dem Lastkreis verbunden zu werden;
wobei der Gleichstromausgangskreis ferner umfasst:
ein Stromabtastelement (130), wobei das Stromabtastelement (130) in Reihenschaltung mit dem Halbleiterschalter (140) und der Entkopplungsinduktivität (170) verbunden ist und in Parallelschaltung mit der ersten Diode (150) verbunden ist, wobei
das Stromabtastelement (130) konfiguriert ist, um einen Strom zu erfassen, und wenn der Strom größer als ein bestimmter Strom ist, der Halbleiterschalter (140) ausgeschaltet wird;
wobei der Lastkreis insgesamt N Zweige umfasst und
der Gleichstromausgangskreis ferner umfasst:
N negative Anschlüsse (190), wobei jeder negative Anschluss (190) mit der negativen Elektrode der Leistungsversorgung (110) verbunden ist, ein i-ter negativer Anschluss (190) in den N negativen Anschlüssen (190) und der positive Anschluss (180) einen i-ten Zweig des Lastkreises gemeinsam versorgen, i∈[1, N] und N>1;
N Halbleiterschalter (140), wobei ein i-ter Halbleiterschalter (140) zwischen der negativen Elektrode der Leistungsversorgung (110) und dem i-ten negativen Anschluss (190) verbunden ist und konfiguriert ist, um zwischen ein und aus des i-ten Zweigs umzuschalten, wobei
die Entkopplungsinduktivität (170) zwischen der negativen Elektrode der Leistungsversorgung (110) und den N Halbleiterschaltern (140) verbunden ist;
N erste Dioden (150), wobei eine positive Elektrode einer i-ten ersten Diode (150) mit der negativen Elektrode der Leistungsversorgung (110) verbunden ist, eine negative Elektrode mit dem i-ten negativen Anschluss (190) verbunden ist und die i-te erste Diode (150) in Parallelschaltung mit dem i-ten Halbleiterschalter (140) und der Entkopplungsinduktivität (170) verbunden ist; und
N zweite Dioden (160), wobei eine positive Elektrode einer i-ten zweiten Diode (160) mit dem i-ten negativen Anschluss (190) verbunden ist, eine negative Elektrode mit dem positiven Anschluss (180) verbunden ist und die i-te zweite Diode (160) in Parallelschaltung mit dem i-ten Zweig des Lastkreises verbunden ist;
wobei der Gleichstromausgangskreis ferner umfasst:
N Stromabtastelemente (130), wobei ein i-tes Stromabtastelement (130) in Reihenschaltung mit dem i-ten Halbleiterschalter (140) verbunden ist und in Parallelschaltung mit der i-ten ersten Diode (150) verbunden ist, wobei das i-te Stromabtastelement (130) konfiguriert ist, um einen Strom zu erfassen, und wenn der Strom größer als ein bestimmter Strom ist, der i-te Halbleiterschalter (140) ausgeschaltet wird.

3. Gleichstromausgangskreis nach einem der Ansprüche 1 bis 2, wobei der Halbleiterschalter (140) ein Bipolartransistor mit isoliertem Gate, ein Metall-Oxid-Halbleiter-Feldeffekttransistor oder ein Galliumnitrid-FET ist.

4. Gleichstromausgangskreis nach einem der Ansprüche 1 bis 3, wobei die erste Diode (150) oder die zweite Diode (160) eine gängige Gleichrichterdiode, eine schnelle Diode, eine gängige Schaltdiode, eine Schottky-Diode, eine Suppressordiode oder eine Zenerdiode ist.

5. Gleichstromausgangskreis nach einem der Ansprüche 1 bis 4, wobei die erste Diode (150) oder die zweite Diode (160) eine Vielzahl von in Parallelschaltung verbundenen Dioden umfasst.

6. Gleichstromausgangskreis nach einem der Ansprüche 1 bis 5, wobei die erste Diode (150) und die zweite Diode (160) jeweils eine Diode, die durch Verbinden der Dioden in Reihenschaltung erhalten wird, umfassen;
eine Vielzahl von Dioden, von denen jede durch Verbinden der Dioden in Reihenschaltung erhalten wird, umfassen; oder
Dioden, die zusammengepackt sind und die sowohl über Reihenverbindung als auch Parallelverbindung erhalten werden, umfassen.

## Revendications

1. Circuit de sortie de courant continu comprenant :
une alimentation électrique (110), configurée pour délivrer un courant continu, et
comprenant une électrode positive et une électrode négative ;
une pluralité de ports d'alimentation électrique, configurés pour alimenter un circuit de charge, et comprenant un port positif (180) et un port négatif (190), dans lequel le port positif (180) est connecté à l'électrode positive de l'alimentation électrique (110), et le port négatif (190) est connecté à l'électrode négative de l'alimentation électrique (110) ;
un interrupteur à semi-conducteur (140), dans lequel l'interrupteur à semi-conducteur (140) est connecté entre l'électrode négative de l'alimentation électrique (110) et le port négatif (190), et est configuré pour mettre en marche et arrêter le circuit de charge ;
une bobine d'induction de découplage (170), dans lequel la bobine d'induction de découplage (170) et l'interrupteur à semi-conducteur (140) sont connectés en série entre l'électrode négative de l'alimentation électrique (110) et le port négatif (190) ;
une première diode (150), dans lequel une électrode positive de la première diode (150) est connectée à l'électrode négative de l'alimentation électrique, une électrode négative de la première diode (150) est connectée au port négatif (190), et la première diode (150) est connectée en parallèle à l'interrupteur à semi-conducteur (140) et à la bobine d'induction de découplage (170) ; et
une seconde diode (160), dans lequel une électrode positive de la seconde diode (160) est connectée au port négatif (190), une électrode négative de la seconde diode (160) est connectée au port positif (180), et la seconde diode (160) est configurée pour être connectée en parallèle au circuit de charge ;
dans lequel le circuit de sortie de courant continu comprend en outre :
un élément d'échantillonnage de courant (130), dans lequel l'élément d'échantillonnage de courant (130) est connecté en série à l'interrupteur à semi-conducteur (140) et à la bobine d'induction de découplage (170), et est connecté en parallèle à la première diode (150), dans lequel
l'élément d'échantillonnage de courant (130) est configuré pour détecter un courant, et lorsque le courant est supérieur à un courant spécifié, l'interrupteur à semi-conducteur (140) est désactivé ;
dans lequel le circuit de charge comprend au total N branches, et
le circuit de sortie de courant continu comprend en outre :
N ports négatifs (190), dans lequel chaque port négatif (190) est connecté à l'électrode négative de l'alimentation électrique (110), un i^{ème} port négatif (190) dans les N ports négatifs (190) et le port positif (180) alimentent conjointement une i^{ème} branche du circuit de charge, i∈[1, N], et N > 1 ;
N interrupteurs à semi-conducteur (140), dans lequel un i^{ème} interrupteur à semi-conducteur (140) est connecté entre l'électrode négative de l'alimentation électrique (110) et le i^{ème} port négatif (190), et est configuré pour mettre en marche et arrêter la i^{ème} branche ;
N bobines d'induction de découplage (170), dans lequel une i^{ème} bobine d'induction de découplage (170) et le i^{ème} interrupteur à semi-conducteur (140) sont connectés en série entre l'électrode négative de l'alimentation électrique (110) et le i^{ème} port négatif (190) ;
N premières diodes (150), dans lequel une électrode positive d'une i^{ème} première diode (150) est connectée à l'électrode négative de l'alimentation électrique (110), une électrode négative est connectée au i^{ème} port négatif (190), et la i^{ème} première diode (150) est connectée en parallèle au i^{ème} interrupteur à semi-conducteur (140) et à la i^{ème} bobine d'induction de découplage (170) ; et
N secondes diodes (160), dans lequel une électrode positive d'une i^{ème} seconde diode (160) est connectée au i^{ème} port négatif (190), une électrode négative est connectée au port positif (180), et la i^{ème} seconde diode (160) est connectée en parallèle à la i^{ème} branche du circuit de charge ;
dans lequel le circuit de sortie de courant continu comprend en outre :
N éléments d'échantillonnage de courant (130), dans lequel un i^{ème} élément d'échantillonnage de courant (130) est connecté en série au i^{ème} interrupteur à semi-conducteur (140) et à la i^{ème} bobine d'induction de découplage (170), et est connecté en parallèle à la i^{ème} première diode (150), dans lequel
le i^{ème} élément d'échantillonnage de courant (130) est configuré pour détecter un courant, et lorsque le courant est supérieur à un courant spécifié, le i^{ème} interrupteur à semi-conducteur (140) est désactivé.

2. Circuit de sortie de courant continu, comprenant :
une alimentation électrique (110), configurée pour délivrer un courant continu, et
comprenant une électrode positive et une électrode négative ;
une pluralité de ports d'alimentation électrique, configurés pour alimenter un circuit de charge, et comprenant un port positif (180) et un port négatif (190), dans lequel le port positif (180) est connecté à l'électrode positive de l'alimentation électrique (110), et le port négatif (190) est connecté à l'électrode négative de l'alimentation électrique (110) ;
un interrupteur à semi-conducteur (140), dans lequel l'interrupteur à semi-conducteur (140) est connecté entre l'électrode négative de l'alimentation électrique (110) et le port négatif (190), et est configuré pour mettre en marche et arrêter le circuit de charge ;
une bobine d'induction de découplage (170), dans lequel la bobine d'induction de découplage (170) et l'interrupteur à semi-conducteur (140) sont connectés en série entre l'électrode négative de l'alimentation électrique (110) et le port négatif (190) ;
une première diode (150), dans lequel une électrode positive de la première diode (150) est connectée à l'électrode négative de l'alimentation électrique, une électrode négative de la première diode (150) est connectée au port négatif (190), et la première diode (150) est connectée en parallèle à l'interrupteur à semi-conducteur (140) et à la bobine d'induction de découplage (170) ; et
une seconde diode (160), dans lequel une électrode positive de la seconde diode (160) est connectée au port négatif (190), une électrode négative de la seconde diode (160) est connectée au port positif (180), et la seconde diode (160) est configurée pour être connectée en parallèle au circuit de charge ;
dans lequel le circuit de sortie de courant continu comprend en outre :
un élément d'échantillonnage de courant (130), dans lequel l'élément d'échantillonnage de courant (130) est connecté en série à l'interrupteur à semi-conducteur (140) et à la bobine d'induction de découplage (170), et est connecté en parallèle à la première diode (150), dans lequel
l'élément d'échantillonnage de courant (130) est configuré pour détecter un courant, et lorsque le courant est supérieur à un courant spécifié, l'interrupteur à semi-conducteur (140) est désactivé ;
dans lequel le circuit de charge comprend au total N branches, et
le circuit de sortie de courant continu comprend en outre :
N ports négatifs (190), dans lequel chaque port négatif (190) est connecté à l'électrode négative de l'alimentation électrique (110), un i^{ème} port négatif (190) dans les N ports négatifs (190) et le port positif (180) alimentent conjointement une i^{ème} branche du circuit de charge, i∈[1, N], et N > 1 ;
N interrupteurs à semi-conducteur (140), dans lequel un i^{ème} interrupteur à semi-conducteur (140) est connecté entre l'électrode négative de l'alimentation électrique (110) et le i^{ème} port négatif (190), et est configuré pour commuter entre marche et arrêt de la i^{ème} branche, dans lequel
la bobine d'induction de découplage (170) est connectée entre l'électrode négative de l'alimentation électrique (110) et les N interrupteurs à semi-conducteur (140) ;
N premières diodes (150), dans lequel une électrode positive d'une i^{ème} première diode (150) est connectée à l'électrode négative de l'alimentation électrique (110), une électrode négative est connectée au i^{ème} port négatif (190), et la i^{ème} première diode (150) est connectée en parallèle au i^{ème} interrupteur à semi-conducteur (140) et à la bobine d'induction de découplage (170) ; et
N secondes diodes (160), dans lequel une électrode positive d'une i^{ème} seconde diode (160) est connectée au i^{ème} port négatif (190), une électrode négative est connectée au port positif (180), et la i^{ème} seconde diode (160) est connectée en parallèle à la i^{ème} branche du circuit de charge ;
dans lequel le circuit de sortie de courant continu comprend en outre :
N éléments d'échantillonnage de courant (130), dans lequel un i^{ème} élément d'échantillonnage de courant (130) est connecté en série au i^{ème} interrupteur à semi-conducteur (140) et est connecté en parallèle à la i^{ème} première diode (150), dans lequel
le i^{ème} élément d'échantillonnage de courant (130) est configuré pour détecter un courant, et lorsque le courant est supérieur à un courant spécifié, le i^{ème} interrupteur à semi-conducteur (140) est désactivé.

3. Circuit de sortie de courant continu selon l'une quelconque des revendications 1 à 2, dans lequel l'interrupteur à semi-conducteur (140) est un transistor bipolaire à porte isolée, un transistor à effet de champ métal-oxyde-semi-conducteur, ou un TEC au nitrure de gallium.

4. Circuit de sortie de courant continu selon l'une quelconque des revendications 1 à 3, dans lequel la première diode (150) ou la seconde diode (160) est une diode de redressement commune, une diode de récupération rapide, une diode de commutation commune, une diode Schottky, une diode de suppression de tension transitoire ou une diode Zener.

5. Circuit de sortie de courant continu selon l'une quelconque des revendications 1 à 4, dans lequel la première diode (150) ou la seconde diode (160) comprend une pluralité de diodes connectées en parallèle.

6. Circuit de sortie de courant continu selon l'une quelconque des revendications 1 à 5, dans lequel la première diode (150) et la seconde diode (160) comprennent chacune une diode obtenue en connectant des diodes en série ;
comprennent une pluralité de diodes, chacune d'entre elles étant obtenue en connectant des diodes en série ; ou
comprennent des diodes qui sont emballées ensemble et qui sont obtenues à la fois par connexion en série et en parallèle.
